# EUROPEAN PATENT SPECIFICATION

(11) **EP 2 677 260 B1**
(45) Date of publication and mention of the grant of the patent: **13.11.2019**
(21) Application number: 12746555.7
(22) Date of filing: 14.02.2012
(51) Int. Cl.: F28D 7/02, F28D 7/08, F28D 7/10, F28F 3/12, F28F 21/06, F24D 17/02

(54) **HEAT EXCHANGER HAVING A SERPENTINE TUBE UNIT DISPOSED IN A SERPENTINE FLOW PASSAGE FORMING BODY**
WÄRMEÜBERTRAGER MIT EINER SCHLANGENFÖRMIGEN ROHRANORDNUNG IN EINEM KÖRPER, DER EINE SCHLANGENFÖRMIGE STRÖMUNGSPASSAGE FORMT
ÉCHANGEUR THERMIQUE COMPRENANT UN TUBE EN SERPENTIN DANS UN CORPS FORMANT UNE PASSAGE DE FLUIDE EN SERPENTIN

(30) Priority: 14.02.2011 JP 2011028357; 14.02.2011 JP 2011028359
(43) Date of publication of application: 25.12.2013
(73) Proprietor: Panasonic Intellectual Property Management Co., Ltd., Osaka-shi, Osaka 540-6207 (JP)
(72) Inventor: MACHIDA, Hironobu, Osaka-shi, Osaka 540-6207 (JP); SUZUKI, Motohiro, Osaka-shi, Osaka 540-6207 (JP); NISHIDA, Hirofumi, Osaka-shi, Osaka 540-6207 (JP); UCHIYAMA, Yohei, Osaka-shi, Osaka 540-6207 (JP); MORITA, Ken-ichi, Osaka-shi, Osaka 540-6207 (JP); MORIMOTO, Satoru, Osaka-shi, Osaka 540-6207 (JP)
(74) Representative: Eisenführ Speiser
(86) International application number: PCT/JP2012/000949
(87) International publication number: WO 2012/111308

(56) References cited:
- CH-A5- 624 202
- DE-A1- 3 709 426
- DE-A1- 19 623 245
- DE-A1- 19 743 426
- GB-A- 2 116 688
- JP-A- 47 044 252
- JP-A- 2002 283 423
- JP-A- 2002 292 675
- JP-A- 2002 333 290
- JP-A- 2002 333 290
- JP-A- 2008 045 700
- JP-A- 2008 096 008
- JP-A- 2008 265 276
- JP-A- 2009 133 551
- JP-A- 2009 210 232
- JP-A- 2009 210 232
- JP-U- 60 105 967
- US-A- 5 579 650
- US-A- 5 756 189

## Description

### TECHNICAL FIELD

The present invention relates to a heat exchanger and a method for manufacturing the heat exchanger.

### BACKGROUND ART

Recently heat pump water heaters are gaining increasing popularity. Usually, the heat pump water heaters include a heat exchanger for transferring the heat of a refrigerant to water. As such a heat exchanger, a double-tube heat exchanger having an inner tube and an outer tube is known as described in Patent Literature 1. The inner tube and the outer tube typically are made of metal such as copper. Accordingly, this kind of heat exchanger is very heavy. Moreover, it is difficult to reduce the size of the heat exchanger because the outer tube is relatively large in diameter. Furthermore, its material cost is high.

Patent Literature 2 describes a heat exchanger including a tube formed in a serpentine shape and two plates combined with each other so as to sandwich the tube inside. The structure described in Patent Literature 2 is suitable for small heat exchangers.

Patent Literature 3 describes a heat exchanger including a bent inner tube and a resin case accommodating the inner tube. The structure described in Patent Literature 3, which forms the preamble of claim 1, is advantageous for reducing the size and weight of the heat exchanger.

Patent Literature 4 discloses a heat exchanger comprising an elongate tank with top, bottom, side, front and rear walls. A plurality of longitudinally spaced partitions are positioned within the tank and define an elongate serpentine or zig-zag liquid conducting flow passage with upstream and downstream ends. An elongate serpentine or zig-zag formed fluid coolant conducting coil is positioned centrally within and extends longitudinally of the flow passage. The coil has an upstream end portion exiting the tank at the downstream end of the flow passage and a downstream end portion exiting the tank at the upstream end of the flow passage. Liquid inlet and outlet fittings connected with a valve-controlled fluid supply and dispensing means conduct liquid into and out of the flow passage. A fluid recirculating pump has a suction side connected with the downstream end of the flow passage and a discharge side connected with the upstream end of the flow passage and continuously recirculates liquid longitudinally within the flow passage and about the coil The elongate tank is formed as a double-walled metal case comprising a foam insulation.

### CITATION LIST

### Patent Literature

PLT 1: JP 2005-147567 A
PLT 2: JP 2005-249325 A
PLT 3: JP 2002-333290 A
PLT 4: US 5,579,650 A

### SUMMARY OF INVENTION

### Technical Problem

A reduction of the thickness of the resin case can further reduce the weight and cost of the heat exchanger described in Patent Literature 3. However, the reduction of the thickness of the resin case raises a problem in that the heat exchanger has a lower pressure resistant strength and flexural rigidity.

The present invention is intended to increase the strength of a heat exchanger in which a member forming a flow passage is made of a resin material.

### Solution to Problem

That is, the present invention provides a heat exchanger according to claim 1 for exchanging heat between a first fluid and a second fluid, including:
a flow passage forming body having a serpentine first flow passage through which the first fluid is caused to flow; and
a serpentine tube unit having a second flow passage through which the second fluid is caused to flow, the serpentine tube unit being disposed in the first flow passage of the flow passage forming body.

At least a part of the flow passage forming body is composed of a resin foam. The flow passage forming body has a plate-like upper member having a groove portion meandering along an in-plane direction of the upper member, and a plate-like lower member combined with the upper member. The low member covers the groove portion of the upper member so as to form the first flow passage. The groove has a largest thickness at a position farthest from a joining plane between the upper member and the lower member, and the thickness of the groove portion decreases toward the joining plane.

Not part of the present invention is a method for manufacturing a heat exchanger including a flow passage forming body having a serpentine first flow passage through which a first fluid is caused to flow, and a serpentine tube unit having a second flow passage through which a second fluid is caused to flow, the serpentine tube unit being disposed in the first flow passage of the flow passage forming body, the method including steps of:
producing the flow passage forming body; and
combining the flow passage forming body with the serpentine tube unit so that the serpentine tube unit is disposed in the first flow passage.

The step of producing the flow passage forming body includes (i) a step of mixing a foaming agent with a resin material and (ii) a step of molding the resin material while foaming the resin material.

### Advantageous Effects of Invention

In the present invention, at least a part of the flow passage forming body is composed of the resin foam. This makes it possible to provide a heat exchanger having high strength while reducing its weight and cost. Also, the use of the resin foam improves the heat insulating property of the heat exchanger.

### BRIEF DESCRIPTION OF THE DRAWINGS

FIG. 1 is a plan view of a heat exchanger according to Embodiment 1 of the present invention.
FIG. 2 is a cross-sectional view of the heat exchanger shown in FIG. 1 taken along the line II-II.
FIG. 3 is an exploded plan view of the heat exchanger shown in FIG. 1.
FIG. 4 is a partially enlarged plan view of a plate-like member.
FIG. 5 is a partially enlarged cross-sectional view of the plate-like member.
FIG. 6 is a cross-sectional view of a resin foam.
FIG. 7 is a schematic drawing illustrating steps of a method for producing the plate-like member.
FIG. 8 is a cross-sectional view of a heat exchanger according to Modification 1.
FIG. 9 is a perspective view of a heat exchanger according to Embodiment 2 of the present invention.
FIG. 10 is a cross-sectional view of the heat exchanger shown in FIG. 9 taken along the line X-X.
FIG. 11 shows exploded plan views of a flow passage forming body and a serpentine tube unit.
FIG. 12 is a partially enlarged plan view of a plate-like member.
FIG. 13 is a perspective view of the heat exchanger having a fastener.
FIG. 14 is a cross-sectional view of a heat exchanger according to Modification 2.
FIG. 15 is a partial cross-sectional view of a heat exchanger according to Modification 3.
FIG. 16 is a partial cross-sectional view of a heat exchanger according to Modification 4.
FIG. 17 is a partial cross-sectional view of a heat exchanger according to Modification 5.
FIG. 18 is an exploded perspective view of a heat exchanger according to Embodiment 3 of the present invention.
FIG. 19 is a block diagram of a heat pump water heater that can employ a heat exchanger.

### DESCRIPTION OF EMBODIMENTS

Hereinafter, embodiments of the present invention are described with reference to the accompanying drawings. The present invention is not limited to the following embodiments.

### (Embodiment 1)

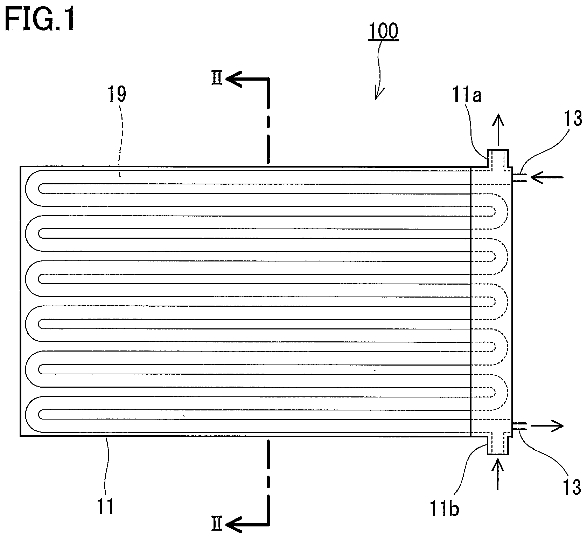

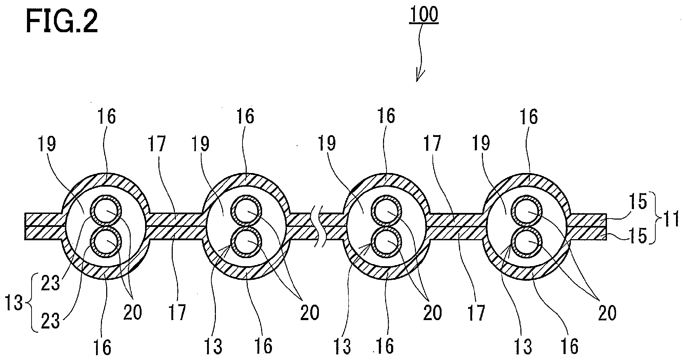

As shown in FIG. 1 and FIG. 2, a heat exchanger 100 of the present embodiment includes a flow passage forming body 11 and a serpentine tube unit 13. The flow passage forming body 11 (a first flow passage forming body) has a rectangular shape in plan view. In an inside of the flow passage forming body 11, a first flow passage 19 through which a first fluid is caused to flow is formed. The first flow passage 19 is a serpentine flow passage. At an outer peripheral portion of the flow passage forming body 11, an inlet 11a and an outlet 11b of the first flow passage 19 are provided. The serpentine tube unit 13 (a second flow passage forming body) has second flow passages 20 through which a second fluid is caused to flow, and is disposed in the inside of the flow passage forming body 11, that is, in the first flow passage 19. Both ends of the serpentine tube unit 13 extend to an outside of the flow passage forming body 11 via connectors that are not shown in the drawings. When the second fluid flows through the second flow passages 20 while the first fluid flows through the first flow passage 19, the heat exchange occurs between the first fluid and the second fluid. An example of the first fluid is water and an example of the second fluid is a refrigerant. At least a part of the flow passage forming body 11 is composed of a resin foam.

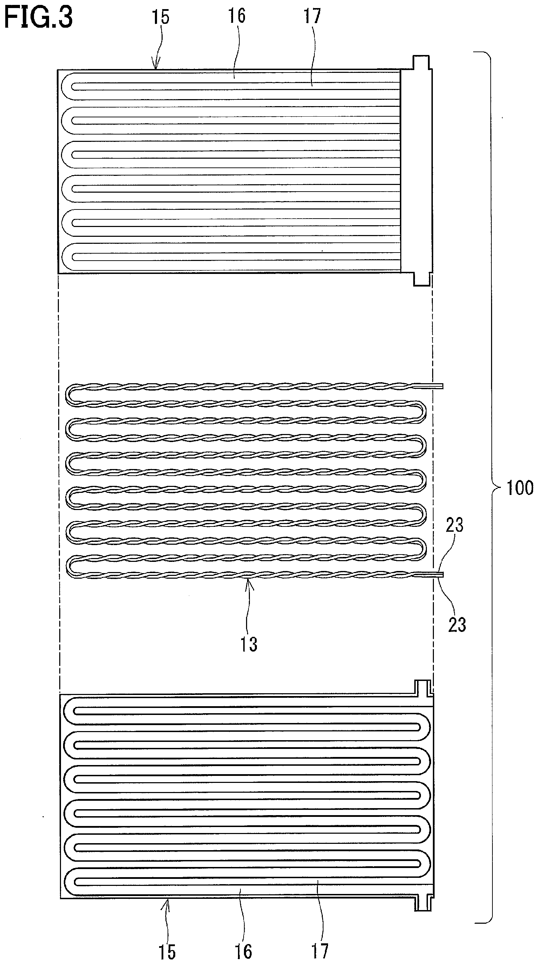

As shown in FIG. 2 and FIG. 3, the flow passage forming body 11 is composed of two plate-like members 15. Each plate-like member 15 is composed of a groove portion 16 and a flat portion 17. The groove portion 16 is a portion meandering along an in-plane direction of the plate-like member 15 and forms the first flow passage 19. The flat portion 17 is a portion having a surface parallel to the in-plane direction of the plate-like member 15. The plate-like member 15 (a lower member 15) located on the lower side is combined with the plate-like member 15 (an upper member 15) located on the upper side so that the first flow passage 19 is formed by covering the groove portion 16 of the plate-like member 15 located on the upper side with the plate-like member 15 located on the lower side. The two plate-like members 15 are joined to each other by welding, for example. A vertically symmetric structure is formed with respect to a joining plane between the plate-like member 15 located on the upper side and the plate-like member 15 located on the lower side. That is, the plate-like member 15 located on the lower side has the groove portion 16 and the flat portion 17 with the same respective shapes as shapes of the groove portion 16 and the flat portion 17 of the plate-like member 15 located on the upper side. Employing a split structure makes it easy to place the serpentine tube unit 13 in the first flow passage 19 having a complex shape. The "in-plane direction" means a direction perpendicular to a thickness direction of a smallest rectangular parallelepiped that can accommodate the heat exchanger 100.

The plate-like member 15 located on the upper side is joined to the plate-like member 15 located on the lower side by welding at the flat portion 17. That is, the flat portion 17 of the plate-like member 15 located on the upper side is welded to the flat portion 17 of the plate-like member 15 located on the lower side. Such a structure makes it possible to ensure sufficiently a joining area between the two plate-like members 15.

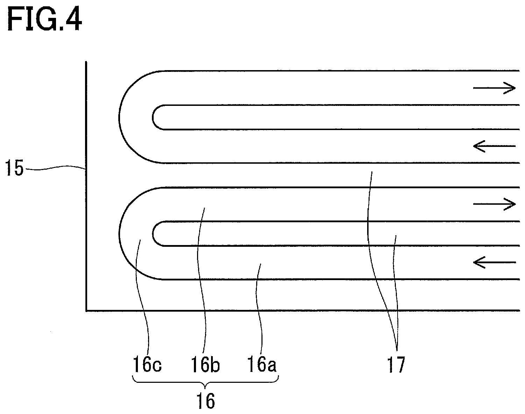

As shown in FIG. 4, the groove portion 16 has an upstream part 16a, a downstream part 16b, and a U-shaped part 16c. The upstream part 16a extends linearly in the in-plane direction of the plate-like member 15. The downstream part 16b extends linearly and parallel to the upstream part 16a. The U-shaped part 16c is located between the upstream part 16a and the downstream part 16b with respect to a flow direction of the first fluid. The flat portion 17 is located between the upstream part 16a and the downstream part 16b. The flat portion 17 integrates the upstream part 16a with the downstream part 16b. However, the shape of the groove portion 16 is not particularly limited as long as it can form the first flow passage 19.

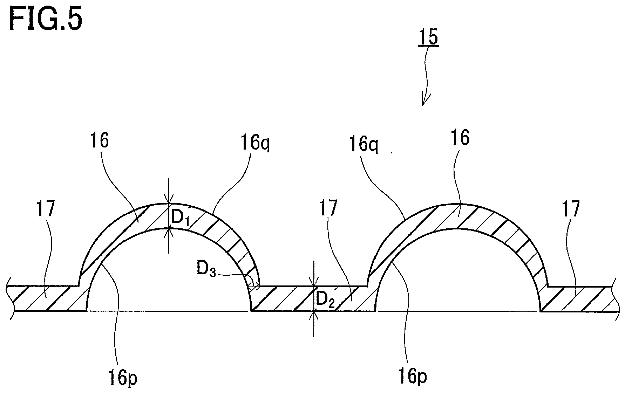

As shown in FIG. 2 and FIG. 5, in the present embodiment, the groove portion 16 has a semicircular outline on a cross section perpendicular to both an in-plane direction of the plate-like member 15 and the flow direction of the first fluid (longitudinal direction of the first flow passage 19). The first flow passage 19 has a circular cross-sectional shape. The circular cross-sectional shape is preferable in the viewpoint of pressure resistant strength.

The groove portion 16 has an inner face 16p forming the first flow passage 19 and an outer face 16q located opposite to the inner face 16p. On the above-mentioned cross section, the inner face 16p and the outer face 16q form semicircular outlines, respectively. The arc forming the outer face 16q has a curvature radius slightly larger than a curvature radius of the arc forming the inner face 16p. The center of the arc forming the inner face 16p is located on the joining plane between the plate-like member 15 located on the upper side and the plate-like member 15 located on the lower side. The center of the arc forming the outer face 16q is offset upward when viewed from the joining plane. However, the shape of the groove portion 16 is not particularly limited. The inner face 16p and the outer face 16q each may form an outline with another shape, such as elliptical, egg, and rectangular shapes.

As shown in FIG. 5, the groove portion 16 has a thickness changing along a circumferential direction of the groove portion 16. The groove portion 16 has a largest thickness D₁ at a position farthest from the joining plane, and a smallest thickness D₃ at a position adjacent to the flat portion 17. That is, the thickness of the groove portion 16 increases as it is distanced from the joining plane. The increase of the thickness of the groove portion 16 is preferable in the viewpoints of pressure resistant strength, flexural rigidity, and heat insulating property. In contrast, the flat portion 17 has a fixed thickness D₂. The largest thickness D₁ of the groove portion 16 may be the same as the thickness D₂ of the flat portion 17. For example, the thickness D₁ is 0.3 to 15 mm, the thickness D₂ is 0.3 to 15 mm, and the thickness D₃ is 0.3 to 3 mm.

The structure of the groove portion 16 shown in FIG. 5 is advantageous in the viewpoint of ensuring the reliability of the vibration welding in manufacturing the heat exchanger 100. In the vibration welding, the vibrational energy of a welding jig is conveyed to a part to be welded and generates frictional heat. The resin material is melted and solidified, thereby bonding the members together. Low efficiency welding elongates the welding time and causes welding burrs. Thus, it is important to convey efficiently the vibrational energy of the jig to the part to be welded. In order to convey efficiently the vibrational energy of the jig to the flat portion 17, it is preferable to ensure sufficiently an area of contact between the welding jig and the flat portion 17. Especially, in the case where the plate-like member 15 is composed of a resin foam, the area of contact between the jig and the flat portion 17 affects significantly the welding efficiency. In the present embodiment, the groove portion 16 is formed to be relatively thin at the position adjacent to the flat portion 17. This structure makes it possible to ensure more sufficiently a surface area of the flat portion 17. That is, this structure makes it possible to ensure more sufficiently the area of contact between the jig and the flat portion 17.

In the present embodiment, the two plate-like members 15 each are composed of a resin foam. That is, each groove portion 16 and each flat portion 17 are made of a foamed resin material. Thereby, the weight of the heat exchanger 100 is reduced, and also sufficient pressure resistant strength and flexural rigidity are ensured. Of course, the effects of the present invention can be obtained even when only one of the two plate-like members 15 is composed of a resin foam. For example, there may be that one plate-like member 15 is composed of a resin foam and the other plate-like member 15 is composed of a non-foam resin.

The resin foam composing the plate-like member 15 is made of, for example, a resin material containing, as a main resin component, at least one selected from the group consisting of polyphenylene sulfide, polyetheretherketone, polytetrafluoroethylene, polysulfone, polyether sulfone, polyarylate, polyamide imide, polyether imide, a liquid crystal polymer, and polypropylene. These resins (thermoplastic resins) have excellent heat resistance and chemical durability, and are hardly degraded even when being in contact with water. The "main resin component" means, among the resin components contained in the resin material, the component contained most in terms of mass ratio. The resin material may contain various additives.

The resin foam may include closed cells and open cells mixed together. When a cross section perpendicular to the in-plane direction of the plate-like member 15 (that is, the cross section in FIG. 2) is observed, the ratio of the closed cells included in the cross section per unit area is higher than the ratio of the open cells included therein, for example. This is preferable in the viewpoints of pressure resistant strength, flexural rigidity, and heat insulating property. The "closed cell" mean a cell isolated from other cells. Usually, a structural body including many closed cells has not only extremely low water absorbency but also excellent shock absorbency, processability and floatability. The "open cell" means a cell made when a plurality of cells adjacent to each other become continuous (communicate to each other). Usually, a structural body including many open cells has excellent water absorbency, gas permeability and sound absorbency.

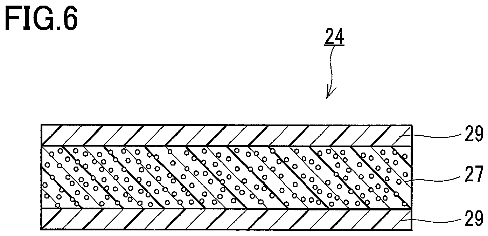

FIG. 6 shows a cross-sectional structure of a resin foam suitable for the plate-like member 15. The resin foam 24 may be composed of a foam layer 27 including cells, and two skin layers 29 formed respectively on an upper face and a lower face of the foam layer 27. The skin layers 29 each have a density higher than a density of the foam layer 27. In the case where the plate-like member 15 is composed of the resin foam 24 thus configured, one skin layer 29 faces the first flow passage 19 so that the first fluid is in contact with the skin layer 29. Since the first fluid hardly penetrates into the resin foam 24, the degradation of the plate-like member 15 can be suppressed. When the density of each skin layer 29 is defined as d₁ and the density of the foam layer 27 is defined as d₂, 1.5 d₂ < d₁ < 5 d₂ holds, for example.

Moreover, in the case where each of the two plate-like members 15 is composed of the resin foam 24, the skin layer 29 and the skin layer 29 can be joined to each other by welding at the flat portion 17. In the case where the two plate-like members 15 are joined to each other by a welding method such as hot plate welding, vibration welding, ultrasonic welding and laser welding, the state of contact between the two plate-like members 15 affects the finishing of the welding. In the present embodiment, a sufficient welding strength is obtained based on satisfactory contact between the skin layers 29 of the two plate-like members 15. Especially, in the case where a welding method, such as vibration welding and ultrasonic welding, in which the heat generated by friction is utilized is adopted, the high-density skin layers 29 suppress the diffusion of vibrational energy, making it possible to generate efficiently the heat necessary for the welding. The flat portion 17 may have a rib (protrusion) for welding.

In the resin foam 24, each skin layer 29 preferably has a substantially non-foam structure. The term "substantially non-foam" means that no cells having a diameter of more than submicron order are present, for example. Even when extremely fine pores, such as pores of angstrom order, are present in the skin layer 29, these pores are closed cells. This makes it impossible for the water in the first flow passage 19 to permeate through the skin layer 29.

The resin foam 24 may contain a filler. The containing of the filler can improve properties of the resin foam 24 such as strength, heat insulating property, heat resistance, insulation property, dimensional stability, resistance to ultraviolet rays, and fire retardancy. The containing of the filler can also improve nuclearization and flowability of the resin material during molding. Furthermore, the containing of the filler makes it possible to reduce the material cost of the resin foam 24, provide the resin foam 24 with electrical conductivity, and give a color to the resin foam 24. The ratio of the filler in the resin foam 24 is 20 to 50 mass%, for example. As the filler, a glass fiber, scaly glass, talc, elastomer, calcium carbonate or the like can be used. Use of a glass fiber or scaly glass makes it possible mainly to improve the strength of the resin foam 24 and reduce the material cost of the resin foam 24. Use of talc makes it possible mainly to improve the strength, heat resistance and dimensional stability of the resin foam 24. Use of calcium carbonate makes it possible mainly to reduce the material cost of the resin foam 24. Use of elastomer makes it possible mainly to improve the flowability of the material. Preferably, a glass fiber can be used as the filler. The glass fiber has an average length in the range of 5 to 500 µm and an average diameter in the range of 0.5 to 30 µm, for example.

In the resin foam 24, the foam layer 27 may have a so-called microcellular plastic structure. The "microcellular plastic" is a foam having closed cells with a cell diameter of approximately 10 µm or less and a cell density of approximately 10⁹ to 10¹⁵ cells/cm³. The microcellular plastic was proposed by Professor Suh et al. at Massachusetts Institute of Technology in 1981.

Next, the serpentine tube unit 13 is described.

In the present embodiment, the serpentine tube unit 13 includes two tubes 23 (refrigerant tubes). At least one of the two tubes 23 has a spiral shape, and the tube 23 having the spiral shape is wound around the other tube 23. Specifically, the two tubes 23 are formed so as to have a double-spiral shape (specifically, they are twisted). The serpentine tube unit 13 having such a structure makes it possible to achieve high heat exchange efficiency. The tubes 23 each are made of metal, such as copper, aluminum and stainless steel, that has an excellent heat conductivity. The serpentine tube unit 13 may be composed of a plurality of tubes 23 as in the present embodiment, or may be composed of one tube 23. Points of contact between the two tubes 23 coincide with the center of the first flow passage 19. The shapes of the tubes 23 of the serpentine tube unit 13 are not particularly limited. For example, one of the two tubes may be composed of a straight tube. The other tube may be spirally wound around the straight tube.

The tubes 23 each may be a so-called leakage detection tube. As known to those skilled in the art, the leakage detection tube has a small-diameter inner tube, and a large-diameter tube having a grooved inner face covering the inner tube. With the leakage detection tube, it is possible to prevent the refrigerant and a lubricating oil from entering into the water even if the inner tube is damaged.

The heat exchanger 100 shown in FIG. 1 can be manufactured by the following method.

First, each plate-like member 15 is produced. In order to make the plate-like member 15 out of a resin foam, a step of mixing a foaming agent with a resin material and a step of molding the resin material while foaming the resin material are performed. As the foaming agent, either a physical foaming agent or a chemical foaming agent may be used. Chemical foaming is a simpler approach than physical foaming and has an advantage in that it can produce a foam by using a general-purpose molding apparatus. Although the physical foaming requires a technique more advanced than that of the chemical foaming, the physical foaming has advantages such that (i) it can foam a resin material, such as polyphenylene sulfide, that has a melting point higher than the upper limit of heat-resistant temperature of the chemical foaming agent, (ii) it is suitable for thin-wall molding, (iii) it can generate cells having an average diameter of several tens of micrometers or less, (iv) it is suitable for molding a structural material, and (v) it generates closed cells easily. A fluid in a supercritical state can be used as the physical foaming agent. Specifically, carbon dioxide in a supercritical state, nitrogen in a supercritical state or the like can be impregnated into the resin material.

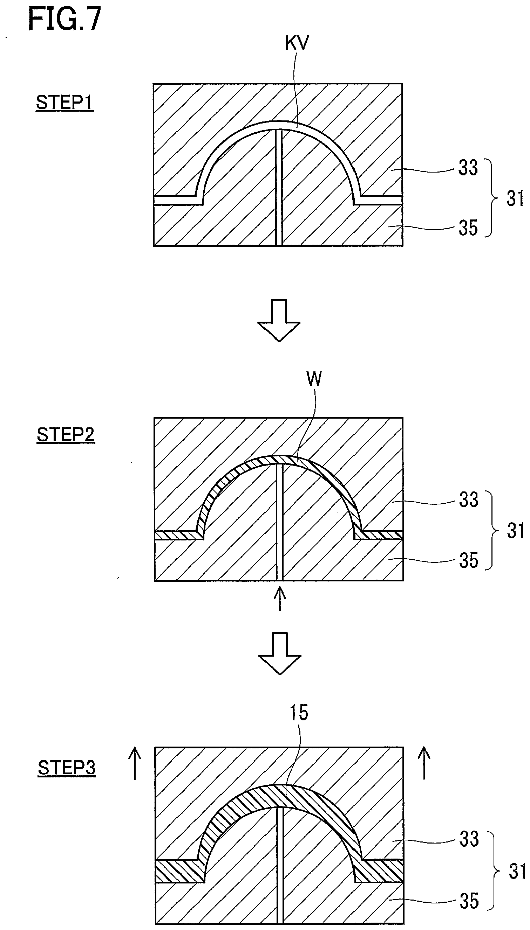

Preferably, each plate-like member 15 can be produced by injection molding. As shown in STEP 1 and STEP 2 in FIG. 7, a resin material W containing the foaming agent is injected into a cavity KV of a mold 31. After the resin material W is injected into the cavity KV, a volumetric capacity of the cavity KV is expanded as shown in STEP 3. Specifically, the volumetric capacity of the cavity KV can be expanded so that the resin material W charged into the cavity KV is foamed. For example, an upper mold 33 (movable mold) is moved relatively to a lower mold 35 (stationary mold). This expands the volumetric capacity of the cavity KV and can foam the resin material W. The mold 31 may be configured so that the resin material W pushes the upper mold 33 as the foaming proceeds and accordingly the volumetric capacity of the cavity KV is expanded automatically. In this case, the shape of the molded product (plate-like member 15) is controlled by the stop position of the upper mold 33.

The foaming ratio is not particularly limited. From the viewpoint of the strength of the plate-like member 15, it is 2 to 4, for example. The "foaming ratio" is a ratio of the thickness of the member after being foamed to the thickness of the member before being foamed. For example, when the thickness of the member being molded is increased from 1 mm to 2 mm by being foamed, the foaming ratio is 2. When the foaming ratio is 4 and the thickness of the member before being foamed is 0.5 to 1.0 mm, the thickness of the member after being foamed is 2.0 to 4.0 mm. An excessively high foaming ratio causes open cells and a fault easily.

In the injection molding using the mold 31, the resin material W injected into the cavity KV is in contact with the upper mold 33 and the lower mold 35 and cooled. This forms the two skin layers 29 described with reference to FIG. 6. The thickness of each skin layer 29 can be controlled by the temperature of the mold 31 and/or a core back starting time. The "core back starting time" is a period from a point of time when the resin material W is injected into the cavity KV to a point of time when the upper mold 33 starts to be moved.

A proper amount of a filler, such as a glass fiber, contained in the resin material W may exert the effect of enhancing the foaming.

Next, the two plate-like members 15 are combined with each other while sandwiching the serpentine tube unit 13 between the two plate-like members 15 so that the serpentine tube unit 13 is disposed in the first flow passage 19. Specifically, the flat portion 17 and the flat portion 17 are joined to each other by welding. Thereby, the heat exchanger 100 is obtained. As the welding method, vibration welding can be used suitably in the viewpoints of cost, productivity, etc.

It is not essential that each entire plate-like member 15 is made of the resin foam. The plate-like member 15 may include a foamed part and a non-foamed part.

### (Modification 1)

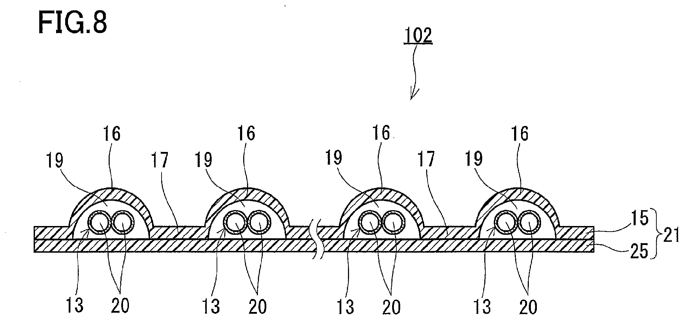

FIG. 8 is a cross-sectional view of a heat exchanger according to Modification 1. The heat exchanger 102 includes a flow passage forming body 21 and the serpentine tube unit 13. The flow passage forming body 21 has the plate-like member 15 (upper member 15) and a plate-like member 25 (lower member 25). The upper member 15 is the aforedescribed plate-like member 15. The lower member 25 has no portion equivalent to the groove portion 16 of the upper member 15, and is composed only of a portion equivalent to the flat portion 17 of the upper member 15. The lower member 25 closes the groove portion 16 of the upper member 15, thereby forming the first flow passage 19. In this way, the structure of the lower member 25 may be different from the structure of the upper member 15. For example, it is possible to employ the lower member having a groove portion with a shape (specifically a depth) different from that of the upper member 15. Moreover, only one selected from the upper member 15 and the lower member 25 may be composed of the resin foam. In this case, only a part of the flow passage forming body 21 is composed of the resin foam.

### (Embodiment 2)

Patent Literature 3 fails to mention the kind of the resin used for the resin case. Since the resin case is in contact with a liquid such as water, it preferably is made of a material that is hardly degraded by the liquid. However, such a material is often expensive. A reduction in the thickness of the resin case can reduce further the weight and cost of the heat exchanger described in Patent Literature 3. On the other hand, the reduction in the thickness of the resin case raises a problem in that the pressure resistant strength and flexural rigidity of the heat exchanger is lowered.

The present inventors studied on reinforcing, with a support body, the member (resin case) for forming the flow passage. The support body can be made of a resin material different from the resin material of the member for forming the flow passage. Since the support body is out of contact with a liquid such as water, various kinds of resins can be used for the support body. This is advantageous in reducing the cost of the heat exchanger. However, due to a temperature change during heat exchange and a difference between linear expansion coefficients of the resin materials, the following new problems may arise. That is, there is a possibility that when the support body is directly joined to the member for forming the flow passage, the support body is separated from the member for forming the flow passage due to a temperature change at the time of use and the reinforcing effect is lost.

The present embodiment provides a heat exchanger for exchanging heat between the first fluid and the second fluid, including a flow passage forming body, a serpentine tube unit, a support body, and an interlayer. The flow passage forming body has the first flow passage through which the first fluid is caused to flow. At least a part of the flow passage forming body is made of a first resin material. The serpentine tube unit has the second flow passage through which the second fluid is caused to flow, and is disposed in the first flow passage of the flow passage forming body. The support body is disposed around the flow passage forming body so as to reinforce the flow passage forming body, and is made of a second resin material having a linear expansion coefficient different from a linear expansion coefficient of the first resin material. The interlayer is disposed between the flow passage forming body and the support body and mitigates a difference between the linear expansion coefficient of the flow passage forming body and the linear expansion coefficient of the support body.

In the present embodiment, since the flow passage forming body is made of the resin material, it is hardly corroded and also has excellent heat insulating property. Since the flow passage forming body is reinforced with the support body, the pressure resistance and shock resistance of the flow passage forming body are improved as well. Moreover, at least a part of the flow passage forming body is made of the first resin material, and the support body is made of the second resin material. The interlayer mitigates the difference between the linear expansion coefficient of the flow passage forming body (the first resin material) and the linear expansion coefficient of the support body (the second resin material). Thus, even when the temperature of the flow passage forming body changes significantly in use of the heat exchanger, the support body can continue reinforcing the flow passage forming body.

Hereinafter, the present embodiment is described in detail with reference to the accompanying drawings. Hereinbelow, common components among the aforementioned embodiment or modification and the following embodiments or modifications are indicated by the same reference numerals and the descriptions thereof may be omitted.

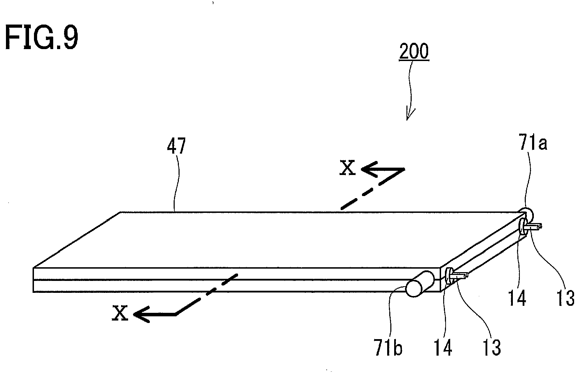

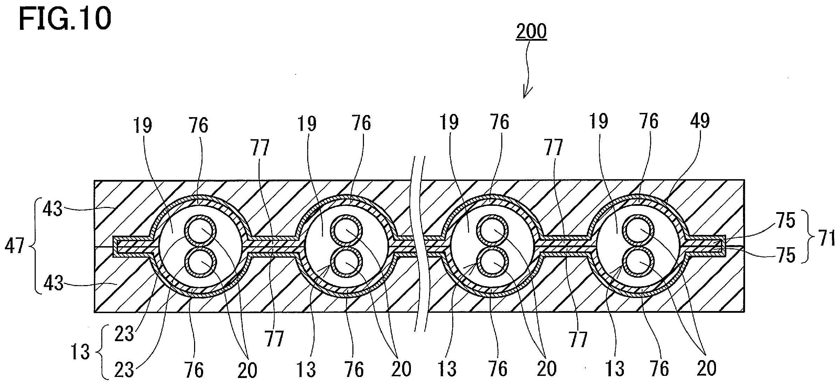

As shown in FIG. 9 and FIG. 10, the heat exchanger 200 of the present embodiment includes the flow passage forming body 71, the support body 47, the interlayer 49, and the serpentine tube unit 13. The flow passage forming body 71 and the support body 47 each have a rectangular shape in plan view. Accordingly, the heat exchanger 200 also has a rectangular shape in plan view. The support body 47 is disposed around the flow passage forming body 71 so as to reinforce the flow passage forming body 71. The flow passage forming body 71 is made of the first resin material. The support body 47 is made of the second resin material. The second resin material has a linear expansion coefficient different from a linear expansion coefficient of the first resin material. The interlayer 49 is disposed between the flow passage forming body 71 and the support body 47 so as to mitigate a difference between a linear expansion coefficient of the flow passage forming body 71 and a linear expansion coefficient of the support body 47. Specifically, the interlayer 49 mitigates a stress that may occur based on the difference between the linear expansion coefficient of the flow passage forming body 71 and the linear expansion coefficient of the support body 47.

In an inside of the flow passage forming body 71, the first flow passage 19 through which the first fluid is caused to flow is formed. At an outer peripheral portion of the flow passage forming body 71, an inlet 71a and an outlet 71b of the first flow passage 19 are provided. The serpentine tube unit 13 has the second flow passages 20 through which the second fluid is caused to flow, and is disposed in the inside of the flow passage forming body 71, that is, in the first flow passage 19. The both ends of the serpentine tube unit 13 extend to an outside of the flow passage forming body 71 and the support body 47 via connectors 14. When the second fluid flows through the second flow passages 20 while the first fluid flows through the first flow passage 19, the heat exchange occurs between the first fluid and the second fluid. An example of the first fluid is water and an example of the second fluid is a refrigerant.

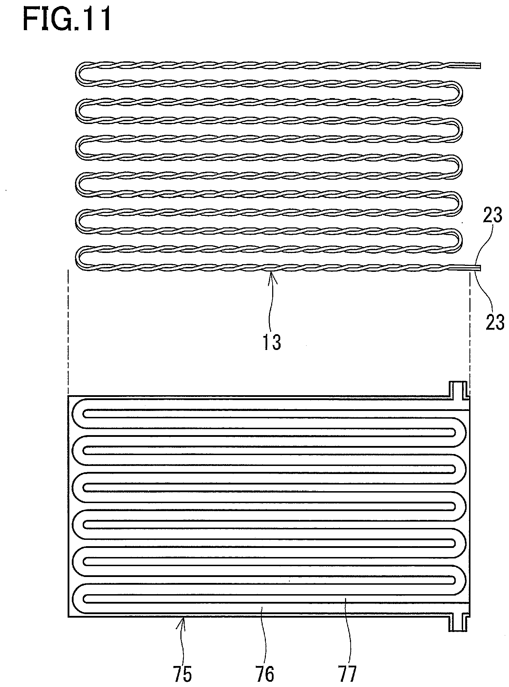

As shown in FIG. 10 and FIG. 11, the flow passage forming body 71 is composed of two plate-like members 75. Each plate-like member 75 is composed of a groove portion 76 and a flat portion 77. The groove portion 76 is a portion meandering along an in-plane direction of the plate-like member 75 and forms the first flow passage 19. The flat portion 77 is a portion having a surface parallel to the in-plane direction of the plate-like member 75. The plate-like member 75 (lower member 75) located on the lower side is combined with the plate-like member 75 (upper member 75) located on the upper side so that the first flow passage 19 is formed by covering the groove portion 76 of the plate-like member 75 located on the upper side with the plate-like member 75 located on the lower side. The two plate-like members 75 are joined to each other by welding, for example. A vertically symmetric structure is formed with respect to a joining plane between the plate-like member 75 located on the upper side and the plate-like member 75 located on the lower side. That is, the plate-like member 75 located on the lower side has the groove portion 76 and the flat portion 77 with the same respective shapes as shapes of the groove portion 76 and the flat portion 77 of the plate-like member 15 located on the upper side. Employing a split structure makes it easy to place the serpentine tube unit 13 in the first flow passage 19 having a complex shape. The "in-plane direction" means a direction perpendicular to a thickness direction of a smallest rectangular parallelepiped that can accommodate the heat exchanger 200.

The plate-like member 75 located on the upper side is joined to the plate-like member 75 located on the lower side by welding at the flat portion 77. That is, the flat portion 77 of the plate-like member 75 located on the upper side is welded to the flat portion 77 of the plate-like member 75 located on the lower side. Such a structure makes it possible to ensure sufficiently a joining area between the two plate-like members 75.

The groove portion 76 has a semicircular outline on the cross section perpendicular to both an in-plane direction of the plate-like member 75 and the flow direction of the first fluid (longitudinal direction of the first flow passage 19). Accordingly, the first flow passage 19 has a circular cross-sectional shape. The circular cross-sectional shape is preferable in the viewpoint of pressure resistant strength. However, the shape of the groove portion 76 is not particularly limited. The groove portion 76 may have an outline with another shape, such as elliptical, egg, and rectangular shapes.

In the present embodiment, both of the two plate-like members 75 are made of the first resin material. This is not essential, and there may be possible that one plate-like member 75 is made of the first resin material and the other plate-like member 75 is made of another resin material. However, considering the fact that the two plate-like members 75 are joined to each other by welding, it is preferable that the both of them are made of the same resin material.

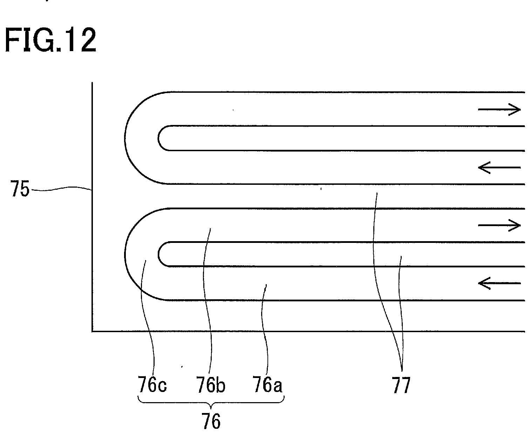

As shown in FIG. 12, the groove portion 76 has an upstream part 76a, a downstream part 76b, and a U-shaped part 76c. The upstream part 76a extends linearly in the in-plane direction of the plate-like member 75. The downstream part 76b extends linearly and parallel to the upstream part 76a. The U-shaped part 76c is located between the upstream part 76a and the downstream part 76b with respect to the flow direction of the first fluid. The flat portion 77 is located between the upstream part 76a and the downstream part 76b. The flat portion 77 integrates the upstream part 76a with the downstream part 76b. However, the shape of the groove portion 76 is not particularly limited as long as it can form the first flow passage 19.

The serpentine tube unit 13 used in the heat exchanger 200 of the present embodiment is the same as the serpentine tube unit 13 used in the heat exchanger 100 of Embodiment 1.

The flow passage forming body 71 and the support body 47 each are in contact with the interlayer 49. The flow passage forming body 71 is covered with the support body 47 via the interlayer 49. The flow passage forming body 71 is reinforced with the support body 47.

As shown in FIG. 10, the support body 47 has an upper support member 43 disposed over the flow passage forming body 71 and a lower support member 43 disposed under the flow passage forming body 71. In the present embodiment, the upper support member 43 is composed of the same part as that of the lower support member 43. At a circumferential portion of the heat exchanger 200, the upper support member 43 is joined to the lower support member 43 by welding, for example. Specifically, each support member 43 has an area larger than an area of the flow passage forming body 71 in plan view. Each support member 43 has, in an in-plane direction, an outer peripheral portion protruding beyond the flow passage forming body 71. The outer peripheral portion of the upper support member 43 is joined to the outer peripheral portion of the lower support member 43. Such a structure makes it possible to obtain more sufficiently the effect of reinforcing the flow passage forming body 71.

The interlayer 49 is disposed both between the upper member 75 and the upper support member 43 and between the lower member 75 and the lower support member 43. In the present embodiment, the interlayer 49 covers an entire upper face of the flow passage forming body 71 and an entire lower face of the flow passage forming body 71. Furthermore, the support body 47 covers the entire interlayer 49.

In the present embodiment, the flow passage forming body 71 is made of the first resin material and the support body 47 is made of the second resin material. Preferably, the linear expansion coefficient of the first resin material is lower than the linear expansion coefficient of the second resin material. When the heat exchanger 200 is used in a heat pump water heater, the temperature change of the flow passage forming body 71 is larger than the temperature change of the support body 47. Thus, it is preferable that the first resin material has a relatively low linear expansion coefficient in the viewpoint of preventing the breakage of the heat exchanger 200 due to a large stress occurring in the flow passage forming body 71. The degree of the difference between the linear expansion coefficient of the first resin material and the linear expansion coefficient of the second resin material is not particularly limited. It is 2 × 10⁻⁵/°C to 7 × 10⁻⁵/°C, for example.

For example, the first resin material contains, as a main resin component, at least one selected from the group consisting of polyphenylene sulfide (PPS), polyetheretherketone (PEEK), polytetrafluoroethylene (PTFE), polysulfone (PSF), polyether sulfone (PES), polyarylate (PAR), polyamide imide (PAI), polyether imide (PEI), and a liquid crystal polymer (LCP). Since these resins (super engineering plastics) have excellent heat resistance and chemical durability and are hardly degraded even when they are in contact with water, they can be used suitably for the first resin material. Among them, PPS can be used suitably for the first resin material because of reasons such as that PPS can be obtained easily and has a satisfactory water resistance, and especially PPS has an excellent dimensional stability that allows it to be made into a complex shape. The "main resin component" means, among the resin components contained in the resin material, the component contained most in terms of mass ratio.

The linear expansion coefficients of the above-mentioned resins are as follows at a room temperature of 25°C (unit: × 10⁻⁵/°C).
PPS: 2.6 to 6.9 (0.7 depending on the flow direction)
PEEK: 1.1 to 5.0
PTFE: 4.5 to 7.0
PSF: 1.4 to 5.5
PES: 2.3 to 5.5
PAR: 6.1 to 6.3
PAI: 2.5 to 4.0
PEI: 2.0 to 5.6
LCP: 0.01 to 1.16

For example, the second resin material contains, as a main resin component, at least one selected from the group consisting of polypropylene (PP), polyethylene (PE), an acrylonitrile-butadiene-styrene copolymer (ABS), and polyvinyl chloride (PVC). Since these resins are relatively inexpensive, use of these resins for the support body 47 contributes to the cost reduction of the heat exchanger 200.

The linear expansion coefficients of the above-mentioned resins are as follows at a room temperature of 25°C (unit: × 10⁻⁵/°C).
PP: 11 to 12
PE: 12 to 14
ABS: 7 to 13
PVC: 6 to 8

The interlayer 49 is composed of an elastic body, for example. When the interlayer 49 is composed of an elastic body, it is possible to obtain sufficiently the effect of mitigating the difference between the linear expansion coefficient of the flow passage forming body 71 and the linear expansion coefficient of the support body 47. Also, when the interlayer 49 is composed of an elastic body, the stress relaxation effect by the interlayer 49 is obtained regardless of the large/small relationship between the linear expansion coefficient of the flow passage forming body 71 and a linear expansion coefficient of the interlayer 49 and the large/small relationship between the linear expansion coefficient of the interlayer 49 and the linear expansion coefficient of the support body 47.

Examples of the elastic body include a porous body, sponge, and cloth. That is, for the interlayer 49, it is possible to use a material that can deform while reducing in volume when a load is applied thereto and return to the original shape when the load is removed. Such a material makes it possible to obtain more sufficiently the effect of mitigating the difference between the linear expansion coefficients. When the interlayer 49 is composed of an elastic body, the material of the elastic body is not particularly limited. The elastic body may be made of an arbitrary resin. The elastic body may have a rubber elasticity.

It is not essential that the interlayer 49 is composed of an elastic body. For example, the interlayer 49 may be made of a material having a linear expansion coefficient between the linear expansion coefficient of the first resin material and the linear expansion coefficient of the second resin material. Since this relationship can mitigate sufficiently the difference between the linear expansion coefficient of the first resin material and the linear expansion coefficient of the second resin material, the state of combination between the flow passage forming body 71 and the support body 47 can be maintained even if the temperature of the heat exchanger 200 changes considerably in actual use. Thus, the effect of reinforcing the flow passage forming body 71 by the support body 47 is obtained continuously.

For example, the interlayer 49 can be made of a resin material (a third resin material) containing, as a main resin component, at least one selected from the group consisting of polyamide (PA), polystyrene (PS), polycarbonate (PC), polyethylene terephthalate (PET), a methacrylate polymer (PMMA), polyacetal (POM), polybutylene terephthalate (PBT), and modified polyphenylene ether (mPPE). The third resin material shaped into a sheet shape can be used as the interlayer 49.

The linear expansion coefficients of the above-mentioned resins are as follows at a room temperature of 25°C (unit: × 10⁻⁵/°C).
PA: 2.5 to 10
PS: 5 to 8
PC: 7
PET: 6 to 7
PMMA: 5 to 9
POM: 8 to 11
PBT: 4.5 to 7
mPPE: 3.3 to 7.7

The interlayer 49 may be composed of an adhesive. For example, it is possible to use, for the interlayer 49, an adhesive containing at least one selected from the group consisting of a polyvinyl alcohol adhesive, an acrylic resin adhesive, a polyamide adhesive, a phenol resin adhesive, an epoxy resin adhesive, a melamine resin adhesive, a urea resin adhesive, a silicone resin adhesive, a cellulose adhesive, a styrene butadiene adhesive, and a chloroprene adhesive. Especially, a silicone resin adhesive that enables elastic bonding is preferable.

When the interlayer 49 is composed of an adhesive, the flow passage forming body 71 and the support body 47 are bonded to each other by the interlayer 49. As a result, the flow passage forming body 71 is reinforced securely with the support body 47, and the pressure resistant strength and flexural rigidity of the heat exchanger 200 are improved.

In contrast, when the interlayer 49 is made of a resin material having no adhesive property, the flow passage forming body 71 and the support body 47 may not be bonded to each other. The flow passage forming body 71 and the support body 47 may be partially bonded to each other. Furthermore, as aforedescribed, the upper support member 43 and the lower support member 43 may be welded to each other at an outer peripheral portion of the heat exchanger 200. This structure makes it possible to hold securely the flow passage forming body 71 in an inside of the support body 47.

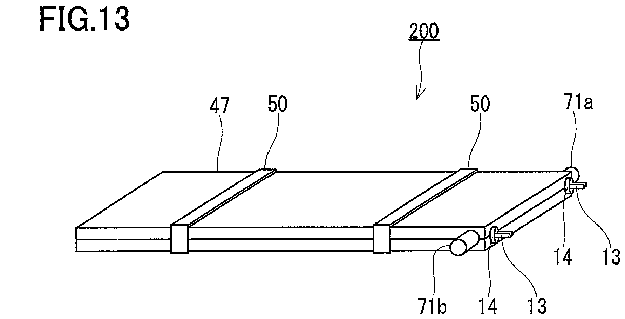

However, it is not essential that the upper support member 43 is joined directly to the lower support member 43. As shown in FIG. 13, the heat exchanger 200 may include a binder 50 fixing the flow passage forming body 71, the interlayer 49 and the support body 47 together. As the binder 50, a binding band made of metal or a resin can be used, for example. In FIG. 13, the binding band as the binder 50 is wound around the support body 47. Use of the binder 50 makes it possible to reinforce securely the flow passage forming body 71 even when the flow passage forming body 71 fails to be joined directly to the support body 47 and/or when the upper support member 43 fails to be joined directly to the lower support member 43. Instead of the binder 50 or together with the binder 50, a fastener, such as a screw, a bolt and a clamp, for fixing the upper support member 43 to the lower support member 43 may be used.

The flow passage forming body 71, the support body 47 and the interlayer 49 each may contain a filler. That is, the first resin material, the second resin material and the third resin material each may contain a filler. The containing of the filler can improve the properties, such as strength, heat insulating property, heat resistance, insulation property, dimensional stability, resistance to ultraviolet rays and fire retardancy, of the molded product. The containing of the filler can also improve nuclearization and flowability of the resin material during molding. Furthermore, the containing of the filler makes it possible to reduce the material cost, provide the molded product with electrical conductivity, and give a color to the molded product. The ratio of the filler in each resin material is 20 to 50 mass%, for example. The filler described in Embodiment 1 can be used suitably also in the present embodiment.

As aforedescribed, the first resin material preferably contains a super engineering plastic as a main resin material. Since many super engineering plastics are relatively expensive, it is preferable to lower the content of the super engineering plastic in the first resin material by using a filler. A filler, such as a glass fiber, usually has a linear expansion coefficient lower than a linear expansion coefficient of a resin. Thus, a large amount of a filler contained in the first resin material increases further the difference between the linear expansion coefficient of the first resin material and the linear expansion coefficient of the second resin material. This makes the role of the interlayer 49 more important.

The heat exchanger 200 can be manufactured by the following method.

First, each plate-like member 75 and each support member 43 are produced by a known resin molding method such as injection molding. Next, the two plate-like members 75 are combined with each other while sandwiching the serpentine tube unit 13 between the two plate-like members 75 so that the serpentine tube unit 13 is disposed in the first flow passage 19. Specifically, the flat portion 77 of one plate-like member 75 and the flat portion 77 of the other plate-like member 75 are joined to each other by a welding technique such as hot plate welding, vibration welding, ultrasonic welding, and laser welding. Next, the interlayer 49 is disposed on the flow passage forming body 71. When the interlayer 49 is an adhesive, the adhesive is applied to the flow passage forming body 71. When the interlayer 49 is an elastic body, a sheet-like member composed of the elastic body is prepared, and the sheet-like member is disposed on a surface of the flow passage forming body 71 as the interlayer 49. Finally, the flow passage forming body 71 and the interlayer 49 are covered with the support body 47. Thereby, the heat exchanger 200 is obtained.

Hereinafter, some modifications are described.

### (Modification 2)

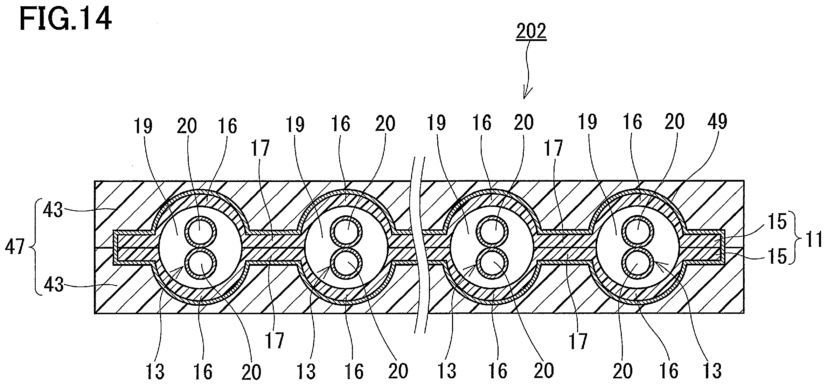

FIG. 14 is a cross-sectional view of a heat exchanger according to Modification 2. The heat exchanger 202 includes the flow passage forming body 11 described in Embodiment 1 instead of the flow passage forming body 71 described with reference to FIGs. 10 to 12. That is, the heat exchanger 202 is obtained by adding the support body 47 and the interlayer 49 to the heat exchanger 100 described in Embodiment 1.

As described in Embodiment 1, the flow passage forming body 11 is composed of the two plate-like members 15 (the upper member and the lower member). Each plate-like member 15 has the groove portion 16 and the flat portion 17. The structures, materials, manufacturing methods, etc. of the flow passage forming body 11 and the plate-like member 15 are as described in detail with reference to FIGs. 1 to 7 in Embodiment 1. In the present modification, the effects described in Embodiment 1 are obtained in addition to the effects based on the support body 47 and the interlayer 49.

### (Modification 3)

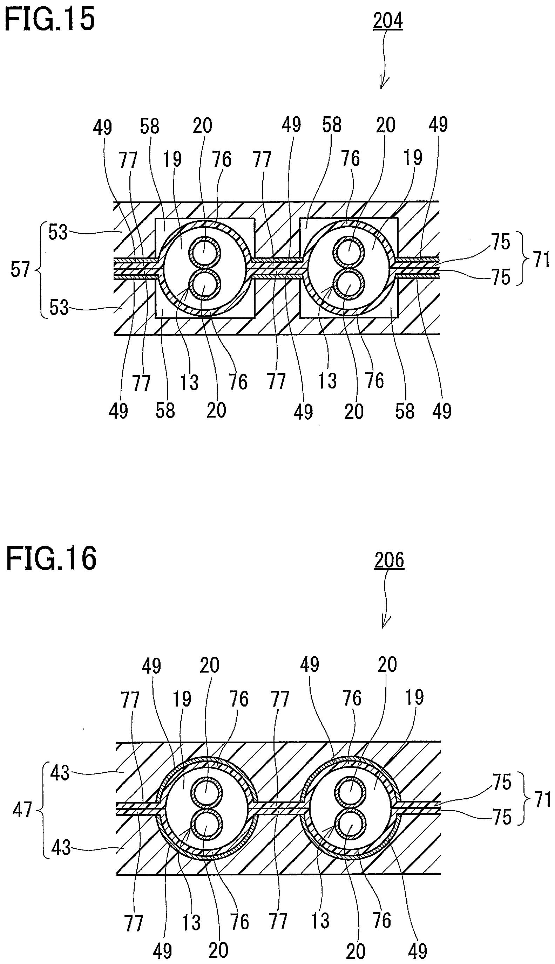

FIG. 15 is a cross-sectional view of a heat exchanger according to Modification 3. The heat exchanger 204 includes the flow passage forming body 71, a support body 57, the interlayer 49, and the serpentine tube unit 13. In the present modification, the interlayer 49 is provided only on the flat portions 77 of the flow passage forming body 71. That is, the interlayer 49 is provided on both of the flat portion 77 of the upper member 75 and the flat portion 77 of the lower member 75. The support body 57 sandwiches, in a thickness direction thereof, the flat portion 77 of the upper member 75 and the flat portion 77 of the lower member 75 via the interlayers 49. In this way, the interlayer 49 may be provided only on a part of the surface of the flow passage forming body 71. By providing the interlayer 49 on the flat portions 77 and allowing the support body 57 to sandwich the interlayers 49 and the flow passage forming body 71 at the flat portions 77, it is possible to strengthen the joining between the two plate-like members 75 of the flow passage forming body 71. As a result, the pressure resistant strength and flexural rigidity of the heat exchanger 204 are improved.

The support body 57 is composed of two support members 53. The support members 53 each have a recess 58 at a portion corresponding to the groove portion 76 of the flow passage forming body 71. The groove portion 76 of the flow passage forming body 71 faces the recess 58. Thereby, a space is formed around the groove portion 76 of the flow passage forming body 71. Instead of the interlayer 49, this space serves the role of eliminating the difference between the linear expansion coefficient of the flow passage forming body 71 and a linear expansion coefficient of the support body 57.

The present modification indicates that the effects of the present invention can be obtained even when only a part of the flow passage forming body 71 is covered with the support body 57.

### (Modification 4)

FIG. 16 is a cross-sectional view of a heat exchanger according to Modification 4. The heat exchanger 206 includes the flow passage forming body 71, the support body 47, the interlayer 49, and the serpentine tube unit 13. In the present modification, the interlayer 49 is provided only on the groove portions 76 of the flow passage forming body 71. That is, the interlayer 49 is provided on both of the groove portion 76 of the upper member 75 and the groove portion 76 of the lower member 75.

### (Modification 5)

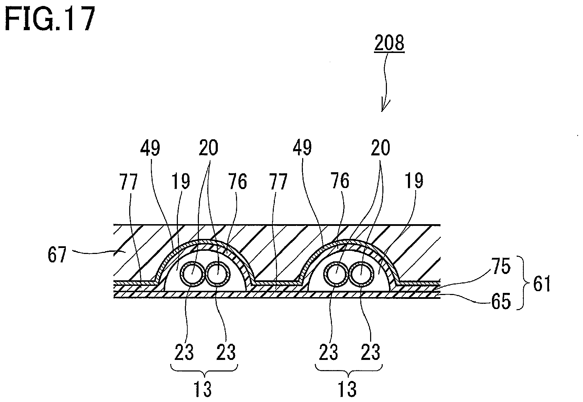

FIG. 17 is a cross-sectional view of a heat exchanger according to Modification 5. The heat exchanger 208 includes a flow passage forming body 61, a support body 67, the interlayer 49, and the serpentine tube unit 13. The flow passage forming body 61 has the plate-like member 75 (the upper member 75) and a plate-like member 65 (a lower member 65). The lower member 65 has no portion equivalent to the groove portion 76 of the upper member 75, and is composed only of a portion equivalent to the flat portion 77 of the upper member 75. The lower member 65 closes the groove portion 76 of the upper member 75, thereby forming the first flow passage 19. In this way, the structure of the lower member 65 may be different from the structure of the upper member 75. For example, it is possible to use the lower member having a groove portion with a shape (specifically a depth) different from that of the upper member 75.

The support body 67 is disposed around the flow passage forming body 61 so as to reinforce the flow passage forming body 61. Specifically, the support body 67 is disposed on the same side as the upper member 75 side. The interlayer 49 is provided between the upper member 75 and the support body 67.

### (Embodiment 3)

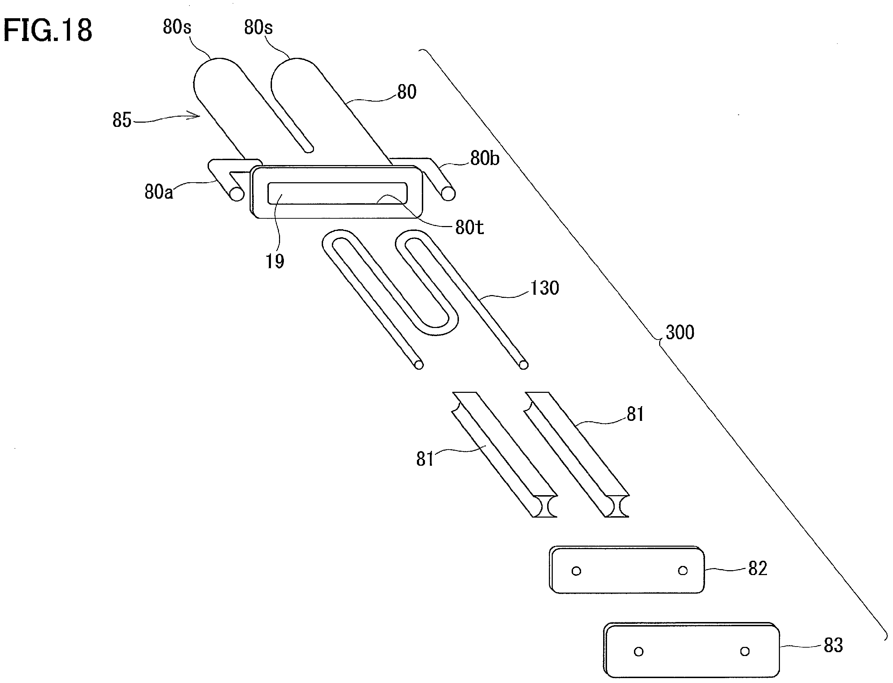

As shown in FIG. 18, a heat exchanger 300 of the present embodiment includes a flow passage forming body 85 and a serpentine tube 130 (a serpentine tube unit). The flow passage forming body 85 has a case 80, a plurality of partition members 81, a packing 82, and a lid 83. The case 80 is a cylindrical member having bottom portions 80s and an opening 80t. In the state in which the heat exchanger 300 is assembled, the serpentine tube 130 is disposed in an inside of the case 80. The partition members 81 each partition the inside of the case 80 so that the first flow passage 19 meandering along the serpentine tube 130 is formed. The case 80 is provided with an inlet 80a and an outlet 80b of the first flow passage 19. The packing 82 and the lid 83 close the opening 80t of the case 80 so that the first flow passage 19 is formed. The case 80 and the partition members 81 each are made of a resin material. Specifically, at least one selected from the case 80 and each partition member 81 is composed of the resin foam. Since the case 80 and the partition members 81 are in contact with the first fluid, it is preferable that they are made of a resin material, such as PPS, that has excellent water resistance. The present embodiment is advantageous in the viewpoints of strength and productivity because it can reduce the welding area.

As can be understood from the embodiments and modifications described above, the structure of the flow passage forming body is not particularly limited.

The embodiments and modifications described above can be combined with each other as long as they fall within the scope of the present invention.

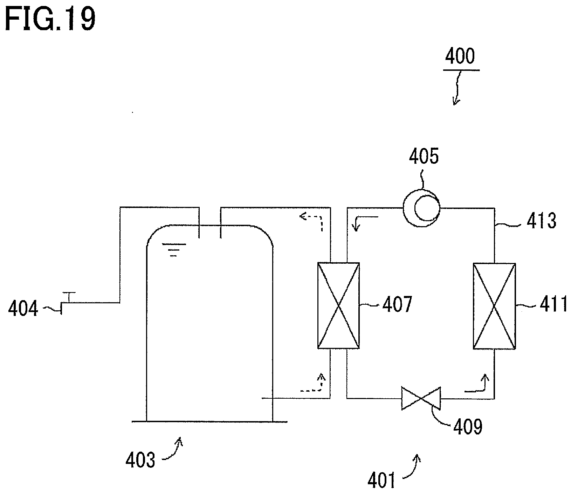

Next, the applications in which the heat exchanger 100 is used are described. FIG. 19 is a block diagram of a heat pump water heater 400 in which the heat exchanger 100 can be employed.

The heat pump water heater 400 includes a heat pump unit 401 and a tank unit 403. The hot water produced in the heat pump unit 401 is held in the tank unit 403. The hot water is supplied from the tank unit 403 to a hot water tap 404. The heat pump unit 401 includes a compressor 405 for compressing a refrigerant, a radiator 407 for cooling the refrigerant, an expansion valve 409 for expanding the refrigerant, an evaporator 411 for evaporating the refrigerant, and refrigerant tubes 413 connecting these devices in this order. A positive displacement expander capable of recovering the expansion energy of the refrigerant may be used instead of the expansion valve 409. As the radiator 407, the heat exchanger 100 (102, 200, 202, 204, 206, 208 or 300) can be used. A plurality of the heat exchangers 100 connected parallel to each other may be used.

### INDUSTRIAL APPLICABILITY

The heat exchanger of the present invention can be used suitably for heat pump water heaters. The applications in which the heat exchanger is used are not limited to the heat pump water heaters, and the heat exchanger of the present invention can be used for other apparatuses such as a hot water heater. Also, the heat exchanger of the present invention can be used in applications, such as a water chiller, other than water heating. Moreover, the fluids subject to heat exchange are not limited to water and a refrigerant, and the heat exchanger of the present invention can be used widely for heat exchange between other liquids, such as oil and brine. Furthermore, the fluids are not limited to liquids, and the heat exchanger of the present invention can be used for heat exchange between a gas and a liquid and heat exchange between gases.

## Claims

1. A heat exchanger (100, 102, 200, 202, 204, 206, 208, 300) for exchanging heat between a first fluid and a second fluid, comprising:
a flow passage forming body (11, 21, 61, 71, 85) having a serpentine first flow passage (19) through which the first fluid is caused to flow; and
a serpentine tube unit (13) having a second flow passage (20) through which the second fluid is caused to flow, the serpentine tube unit (13) being disposed in the first flow passage (19) of the flow passage forming body (11, 21, 61,71,85), whereby
at least a part of the flow passage forming body (11, 21, 61, 71, 85) is composed of a resin material,
the flow passage forming body (11, 21, 61, 71, 85) has a plate-like upper member (15, 75) having a groove portion (16, 76) meandering along an in-plane direction of the upper member (15, 75), and a plate-like lower member (25, 65) combined with the upper member (15, 75),
the lower member (25, 65) covers the groove portion (16, 76) of the upper member (15, 75) so as to form the first flow passage (19),
**characterized in that**
at least a part of the flow passage forming body (11, 21, 61, 71, 85) is composed of a resin foam (24),
the groove portion (16, 76) has a largest thickness at a position farthest from a joining plane between the upper member (15, 75) and the lower member (25, 65), and
the thickness of the groove portion (16, 76) decreases toward the joining plane.

2. The heat exchanger (100, 102, 200, 202, 204, 206, 208, 300) according to claim 1,
wherein the resin foam (24) is composed of a foam layer (27) including cells, and a skin layer (29) that is formed on the foam layer (27) and has a density higher than a density of the foam layer (27), and
the skin layer (29) faces the first flow passage (19) so that the first fluid is in contact with the skin layer (29).

3. The heat exchanger (100, 102, 200, 202, 204, 206, 208, 300) according to claims 1 or 2, wherein the resin foam (24) is made of a resin material containing, as a main resin component, at least one selected from the group consisting of polyphenylene sulfide, polyetheretherketone, polytetrafluoroethylene, polysulfone, polyether sulfone, polyarylate, polyamide imide, polyether imide, a liquid crystal polymer, and polypropylene.

4. The heat exchanger (100, 102, 200, 202, 204, 206, 208, 300) according to any one of claims 1 to 3, wherein the resin foam (24) contains a glass fiber as a filler.

5. The heat exchanger (100, 102, 200, 202, 204, 206, 208, 300) according to claim 1, wherein both of the upper member (15, 75) and the lower member (25, 65) are composed of the resin foam (24).

6. The heat exchanger (100, 102, 200, 202, 204, 206, 208, 300) according to claim 1,
wherein the upper member (15, 75) further has a flat portion (17, 77) having a surface parallel to the in-plane direction, and
the upper member (15, 75) is joined to the lower member (25, 65) by welding at the flat portion (17, 77).

7. The heat exchanger (100, 102, 200, 202, 204, 206, 208, 300) according to any one of claims 1 to 6,
wherein the serpentine tube unit (13) includes two tubes (23),
at least one of the two tubes (23) has a spiral shape, and
the tube (23) having the spiral shape is wound around the other tube (23).

8. The heat exchanger (100, 102, 200, 202, 204, 206, 208, 300) according to claim 1,
wherein at least a part of the flow passage forming body (11, 21, 61, 71, 85) is made of a first resin material, and
the heat exchanger (100, 102, 200, 202, 204, 206, 208, 300) further comprises: a support body (47, 57, 67) that is disposed around the flow passage forming body (11, 21, 61, 71, 85) so as to reinforce the flow passage forming body (11, 21, 61, 71, 85) and is made of a second resin material having a linear expansion coefficient different from a linear expansion coefficient of the first resin material; and an interlayer that is disposed between the flow passage forming body (11, 21, 61, 71, 85) and the support body (47, 57, 67) and mitigates a difference between a linear expansion coefficient of the flow passage forming body (11, 21, 61, 71, 85) and a linear expansion coefficient of the support body (47, 57, 67).

9. The heat exchanger (100, 102, 200, 202, 204, 206, 208, 300) according to claim 8,
wherein the flow passage forming body (11, 21, 61, 71, 85) has a plate-like upper member (15, 75) having a groove portion (16, 76) meandering along an in-plane direction of the upper member (15, 75), and a plate-like lower member (25, 65) combined with the upper member (15, 75),
the lower member (25, 65) covers the groove portion (16, 76) of the upper member (15, 75) so as to form the first flow passage (19), and
at least one selected from the upper member (15, 75) and the lower member (15, 25, 65, 75) is made of the first resin material.

10. The heat exchanger (100, 102, 200, 202, 204, 206, 208, 300) according to claims 8 or 9, wherein the interlayer (49) is composed of an elastic body.

11. The heat exchanger (100, 102, 200, 202, 204, 206, 208, 300) according to claim 10, wherein the elastic body is a porous body, sponge, or cloth.

12. The heat exchanger (100, 102, 200, 202, 204, 206, 208, 300) according to any one of claims 8 to 11, wherein the interlayer (49) is made of a material having a linear expansion coefficient between the linear expansion coefficient of the first resin material and the linear expansion coefficient of the second resin material.

13. The heat exchanger (100, 102, 200, 202, 204, 206, 208, 300) according to any one of claims 8 to 12, wherein the linear expansion coefficient of the first resin material is lower than the linear expansion coefficient of the second resin material.

## Patentansprüche

1. Wärmeübertrager (100, 102, 200, 202, 204, 206, 208, 300) zum Austauschen von Wärme zwischen einem ersten Fluid und einem zweiten Fluid, umfassend:
einen Strömungskanal bildenden Körper (11, 21, 61, 71, 85) mit einem schlangenförmigen ersten Strömungskanal (19), durch den das erste Fluid zu fließen veranlasst wird; und
eine schlangenförmige Rohreinheit (13) mit einem zweiten Strömungskanal (20), durch den das zweite Fluid zu fließen veranlasst wird, wobei die schlangenförmige Rohreinheit (13) in dem ersten Strömungskanal (19) des einen Strömungskanal bildenden Körpers (11, 21, 61, 71, 85) angeordnet ist,
wobei zumindest ein Teil des einen Strömungskanal bildenden Körpers (11, 21, 61, 71, 85) aus einem Harzmaterial besteht,
der einen Strömungskanal bildende Körper (11, 21, 61, 71, 85) ein plattenartiges oberes Element (15, 75) mit einem Nutabschnitt (16, 76), der sich entlang einer in einer Ebene liegenden Richtung des oberen Elements (15, 75) schlängelt, und ein plattenartiges unteres Element (25, 65) aufweist, das mit dem oberen Element (15, 75) kombiniert ist,
das untere Element (25, 65) den Nutabschnitt (16, 76) des oberen Elements (15, 75) bedeckt, um den ersten Strömungskanal zu bilden (19),
**dadurch gekennzeichnet, dass**
zumindest ein Teil des einen Strömungskanal bildenden Körpers (11, 21, 61, 71, 85) aus einem Harzschaum (24) besteht,
der Nutabschnitt (16, 76) eine größte Dicke in einer von einer Verbindungsebene zwischen dem oberen Element (15, 75) und dem unteren Element (25, 65) am weitesten entfernten Position aufweist, und
die Dicke des Nutabschnitts (16, 76) zur Verbindungsebene hin abnimmt.

2. Wärmeübertrager (100, 102, 200, 202, 204, 206, 208, 300) nach Anspruch 1,
wobei der Harzschaum (24) aus einer Schaumschicht (27), die Zellen umfasst, und einer Hautschicht (29) besteht, die auf der Schaumschicht (27) ausgebildet ist und eine höhere Dichte als eine Dichte der Schaumschicht (27) hat, und
die Hautschicht (29) dem ersten Strömungskanal (19) derart zugewandt ist, dass das erste Fluid in Kontakt mit der Hautschicht (29) ist.

3. Wärmeübertrager (100, 102, 200, 202, 204, 206, 208, 300) nach Anspruch 1 oder 2, wobei der Harzschaum (24) aus einem Harzmaterial besteht, das als Hauptharzkomponente mindestens eines enthält, das aus der Gruppe ausgewählt ist, die aus Polyphenylensulfid, Polyetheretherketon, Polytetrafluorethylen, Polysulfon, Polyethersulfon, Polyarylat, Polyamidimid, Polyetherimid, einem Flüssigkristallpolymer und Polypropylen besteht.

4. Wärmeübertrager (100, 102, 200, 202, 204, 206, 208, 300) nach einem der Ansprüche 1 bis 3, wobei der Harzschaum (24) eine Glasfaser als Füllstoff enthält.

5. Wärmeübertrager (100, 102, 200, 202, 204, 206, 208, 300) nach Anspruch 1, wobei sowohl das obere Element (15, 75) als auch das untere Element (25, 65) aus dem Harzschaum (24) besteht.

6. Wärmeübertrager (100, 102, 200, 202, 204, 206, 208, 300) nach Anspruch 1,
wobei das obere Element (15, 75) ferner einen flachen Abschnitt (17, 77) mit einer zu der in einer Ebene liegenden Richtung parallelen Richtung aufweist, und
das obere Element (15, 75) mit dem unteren Element (25, 65) durch Schweißen an den flachen Abschnitt (17, 77) verbunden ist.

7. Wärmeübertrager (100, 102, 200, 202, 204, 206, 208, 300) nach einem der Ansprüche 1 bis 6,
wobei die schlangenförmige Rohreinheit (13) zwei Rohre (23) umfasst,
mindestens eines der zwei Rohre (23) spiralförmig ist, und
das spiralförmige Rohr (23) um das andere Rohr (23) gewunden ist.

8. Wärmeübertrager (100, 102, 200, 202, 204, 206, 208, 300) nach Anspruch 1,
wobei zumindest ein Teil des einen Strömungskanal bildenden Körpers (11, 21, 61, 71, 85) aus einem ersten Harzmaterial besteht, und
der Wärmeübertrager (100, 102, 200, 202, 204, 206, 208, 300) ferner umfasst: einen Tragkörper (47, 57, 67), der um den einen Strömungskanal bildenden Körper (11, 21, 61, 71, 85) angeordnet ist, um den einen Strömungskanal bildenden Körper (11, 21, 61, 71, 85) zu verstärken, und aus einem zweiten Harzmaterial mit einem linearen Ausdehnungskoeffizienten besteht, der verschieden von einem linearen Ausdehnungskoeffizienten des ersten Harzmaterials ist; und eine Zwischenschicht, die zwischen dem einen Strömungskanal bildenden Körper (11, 21, 61, 71, 85) und dem Tragkörper (47, 57, 67) angeordnet ist und eine Differenz zwischen einem linearen Ausdehnungskoeffizienten des einen Strömungskanal bildenden Körpers (11, 21, 61, 71, 85) und einem linearen Ausdehnungskoeffizienten des Tragkörpers (47, 57, 67) abschwächt.

9. Wärmeübertrager (100, 102, 200, 202, 204, 206, 208, 300) nach Anspruch 8,
wobei der einen Strömungskanal bildende Körper (11, 21, 61, 71, 85) ein plattenartiges oberes Element (15, 75) mit einem Nutabschnitt (16, 76), der sich entlang einer in einer Ebene liegenden Richtung des oberen Elements (15, 75) schlängelt, und ein plattenartiges unteres Element (25, 65) aufweist, das mit dem oberen Element (15, 75) kombiniert ist,
das untere Element (25, 65) den Nutabschnitt (16, 76) des oberen Elements (15, 75) bedeckt, um den ersten Strömungskanal (19) zu bilden, und
mindestens eines, das aus dem oberen Element (15, 75) und dem unteren Element (15, 25, 65, 75) ausgewählt ist, aus dem ersten Harzmaterial besteht.

10. Wärmeübertrager (100, 102, 200, 202, 204, 206, 208, 300) nach Anspruch 8 oder 9, wobei die Zwischenschicht (49) aus einem elastischen Körper besteht.

11. Wärmeübertrager (100, 102, 200, 202, 204, 206, 208, 300) nach Anspruch 10, wobei der elastische Körper ein poröser Körper, ein Schwamm oder ein Tuch ist.

12. Wärmeübertrager (100, 102, 200, 202, 204, 206, 208, 300) nach einem der Ansprüche 8 bis 11, wobei die Zwischenschicht (49) aus einem Material mit einem linearen Ausdehnungskoeffizienten zwischen dem linearen Ausdehnungskoeffizienten des ersten Harzmaterials und dem linearen Ausdehnungskoeffizienten des zweiten Harzmaterials besteht.

13. Wärmeübertrager (100, 102, 200, 202, 204, 206, 208, 300) nach einem der Ansprüche 8 bis 12, wobei der lineare Ausdehnungskoeffizient des ersten Harzmaterials niedriger als der lineare Ausdehnungskoeffizient des zweiten Harzmaterials ist.

## Revendications

1. Échangeur de chaleur (100, 102, 200, 202, 204, 206, 208, 300) pour échanger de la chaleur entre un premier fluide et un deuxième fluide, comprenant :
un corps de formation de passage d'écoulement (11, 21, 61, 71, 85) possédant un premier passage d'écoulement en serpentin (19) à travers lequel le premier fluide est amené à s'écouler ; et
une unité de tube en serpentin (13) possédant un deuxième passage d'écoulement (20) à travers lequel le deuxième fluide est amené à s'écouler, l'unité de tube en serpentin (13) étant disposée dans le premier passage d'écoulement (19) du corps de formation de passage d'écoulement (11, 21, 61, 71, 85),
au moins une partie du corps de formation de passage d'écoulement (11, 21, 61, 71, 85) étant composée d'un matériau de résine,
le corps de formation de passage d'écoulement (11, 21, 61, 71, 85) possédant un élément supérieur en forme de plaque (15, 75) possédant une partie de rainure (16, 76) sinueuse le long d'une direction dans le plan de l'élément supérieur (15, 75) et un élément inférieur en forme de plaque (25, 65) combiné à l'élément supérieur (15, 75),
l'élément inférieur (25, 65) recouvrant la partie de rainure (16, 76) de l'élément supérieur (15, 75) de manière à former le premier passage d'écoulement (19),
**caractérisé en ce qu'**au moins une partie du corps de formation de passage d'écoulement (11, 21, 61, 71, 85) est composée d'une mousse de résine (24),
la partie de rainure (16, 76) possède une plus grande épaisseur à une position la plus éloignée d'un plan de jonction entre l'élément supérieur (15, 75) et l'élément inférieur (25, 65) et
l'épaisseur de la partie de rainure (16, 76) diminue vers le plan de jonction.

2. Échangeur de chaleur (100, 102, 200, 202, 204, 206, 208, 300) selon la revendication 1,
la mousse de résine (24) étant composée d'une couche de mousse (27) comprenant des cellules et d'une couche de peau (29) qui est formée sur la couche de mousse (27) et qui possède une densité supérieure à une densité de la couche de mousse (27) et
la couche de peau (29) faisant face au premier passage d'écoulement (19) de telle sorte que le premier fluide est en contact avec la couche de peau (29).

3. Échangeur de chaleur (100, 102, 200, 202, 204, 206, 208, 300) selon les revendications 1 ou 2, la mousse de résine (24) étant constituée d'un matériau de résine contenant, en tant que constituant principal de résine, au moins l'un choisi dans le groupe constitué par le poly (sulfure de phénylène), la polyétheréthercétone, le polytétrafluoroéthylène, la polysulfone, la polyéthersulfone, le polyarylate, le polyamide-imide, le polyétherimide, un polymère à cristaux liquides et le polypropylène.

4. Échangeur de chaleur (100, 102, 200, 202, 204, 206, 208, 300) selon l'une quelconque des revendications 1 à 3, la mousse de résine (24) contenant une fibre de verre en tant que charge.

5. Échangeur de chaleur (100, 102, 200, 202, 204, 206, 208, 300) selon la revendication 1, à la fois l'élément supérieur (15, 75) et l'élément inférieur (25, 65) étant composés de la mousse de résine (24).

6. Échangeur de chaleur (100, 102, 200, 202, 204, 206, 208, 300) selon la revendication 1,
l'élément supérieur (15, 75) possédant en outre une partie plate (17, 77) possédant une surface parallèle à la direction dans le plan et
l'élément supérieur (15, 75) étant relié à l'élément inférieur (25, 65) par soudage au niveau de la partie plate (17, 77).

7. Échangeur de chaleur (100, 102, 200, 202, 204, 206, 208, 300) selon l'une quelconque des revendications 1 à 6,
l'unité de tube en serpentin (13) comprenant deux tubes (23),
au moins l'un des deux tubes (23) possédant une forme en spirale et
le tube (23) possédant la forme de spirale étant enroulé autour de l'autre tube (23).

8. Échangeur de chaleur (100, 102, 200, 202, 204, 206, 208, 300) selon la revendication 1,
au moins une partie du corps de formation de passage d'écoulement (11, 21, 61, 71, 85) étant constituée d'un premier matériau de résine et
l'échangeur de chaleur (100, 102, 200, 202, 204, 206, 208, 300) comprenant en outre : un corps de support (47, 57, 67) qui est disposé autour du corps de formation de passage d'écoulement (11, 21, 61, 71, 85) de façon à renforcer le corps de formation de passage d'écoulement (11, 21, 61, 71, 85) et qui est constitué d'un deuxième matériau de résine possédant un coefficient de dilatation linéaire différent d'un coefficient de dilatation linéaire du premier matériau de résine ; et une couche intermédiaire qui est disposée entre le corps de formation de passage d'écoulement (11, 21, 61, 71, 85) et le corps de support (47, 57, 67) et qui atténue une différence entre un coefficient de dilatation linéaire du corps de formation de passage d'écoulement (11, 21, 61, 71, 85) et un coefficient de dilatation linéaire du corps de support (47, 57, 67).

9. Échangeur de chaleur (100, 102, 200, 202, 204, 206, 208, 300) selon la revendication 8,
le corps de formation de passage d'écoulement (11, 21, 61, 71, 85) possédant un élément supérieur en forme de plaque (15, 75) possédant une partie de rainure (16, 76) sinueuse le long d'une direction dans le plan de l'élément supérieur (15, 75) et un élément inférieur en forme de plaque (25, 65) combiné à l'élément supérieur (15, 75),
l'élément inférieur (25, 65) recouvrant la partie de rainure (16, 76) de l'élément supérieur (15, 75) de façon à former le premier passage d'écoulement (19) et
au moins l'un choisi parmi l'élément supérieur (15, 75) et l'élément inférieur (15, 25, 65, 75) étant constitué du premier matériau de résine.

10. Échangeur de chaleur (100, 102, 200, 202, 204, 206, 208, 300) selon les revendications 8 ou 9, la couche intermédiaire (49) étant composée d'un corps élastique.

11. Échangeur de chaleur (100, 102, 200, 202, 204, 206, 208, 300) selon la revendication 10, le corps élastique étant un corps poreux, une éponge ou un tissu.

12. Échangeur de chaleur (100, 102, 200, 202, 204, 206, 208, 300) selon l'une quelconque des revendications 8 à 11, la couche intermédiaire (49) étant constituée d'un matériau possédant un coefficient de dilatation linéaire entre le coefficient de dilatation linéaire du premier matériau de résine et le coefficient de dilatation linéaire du deuxième matériau de résine.

13. Échangeur de chaleur (100, 102, 200, 202, 204, 206, 208, 300) selon l'une quelconque des revendications 8 à 12, le coefficient de dilatation linéaire du premier matériau de résine étant inférieur au coefficient de dilatation linéaire du deuxième matériau de résine.
